# EUROPEAN PATENT APPLICATION

(11) **EP 4 422 157 A1**
(43) Date of publication of application: **28.08.2024**
(21) Application number: 23190178.6
(22) Date of filing: 08.08.2023
(51) Int. Cl.: H04N 1/00, H04N 1/12

(54) **IMAGE READING APPARATUS, INFORMATION PROCESSING SYSTEM, AND PROGRAM**

(30) Priority: 27.02.2023 JP 2023028574
(71) Applicant: FUJIFILM Business Innovation Corp., Minato-ku Tokyo (JP)
(72) Inventor: MIYAMORI, Shinya, Yokohama-shi, Kanagawa (JP); IZUMIYAMA, Mutsumi, Yokohama-shi, Kanagawa (JP)
(74) Representative: Kurig, Thomas

(57) **Abstract**

An image reading apparatus includes a reading unit that reads an image of paper by a relative movement to the paper, an in-paper region that is a region in which the image of the paper is read by the reading unit, and an image that is provided in an out-of-paper region that is a region outside the paper and is used for diagnosing the image of the paper.

## Description

### BACKGROUND OF THE INVENTION

### (i) Field of the Invention

The present invention relates to an image reading apparatus, an information processing system, and a program.

### (ii) Description of Related Art

For example, JP2020-120246A discloses a configuration as follows. An image forming section forms a test pattern on a first recording medium and a second recording medium having a size smaller than the first recording medium while long sides of the first recording medium and the second recording medium coincide with a transport direction. An image reading section acquires first diagnosis target data obtained by reading the first recording medium and second diagnosis target data obtained by rotating the second recording medium to have the long side that is in a different direction from the long side of the first recording medium and then reading the second recording medium. An abnormal portion is detected and an abnormality factor is diagnosed, by using the test pattern, the first diagnosis target data, the second diagnosis target data, and third diagnosis target data obtained by rotating the second diagnosis target data so that the long side of the second recording medium is in the same direction as the long side of the first recording medium.

### SUMMARY OF THE INVENTION

Here, in a case where an image that is formed on paper by an image forming apparatus and read by an image reading apparatus is diagnosed, in an attempt to distinguish whether a defect due to the diagnosis is caused by the image forming apparatus or the image reading apparatus, for example, a plurality of read images with different reading directions are required, and thus it takes time and effort for a user to prepare the read images.

An object of the present invention is to reduce the time and effort for a user to prepare a read image, as compared with a case where a diagnosis as to whether a detected defect is caused by an image forming apparatus or an image reading apparatus is performed by using a plurality of read images.

According to a first aspect of the present disclosure, there is provided an image reading apparatus including a reading unit that reads an image of paper by a relative movement to the paper, an in-paper region that is a region in which the image of the paper is read by the reading unit, and an image that is provided in an out-of-paper region that is a region outside the paper and is used for diagnosing the image of the paper.

According to a second aspect of the present disclosure, there is provided an image reading apparatus according to the first aspect further including a transmission section that transmits a reading result of the reading unit, in which the transmission section may perform switching between a form of transmitting the reading result in the out-of-paper region and a form of transmitting only the reading result in the in-paper region, in transmitting the reading result in the in-paper region.

According to a third aspect of the present disclosure, there is provided an image reading apparatus according to the second aspect, in which the switching may be performed by an operation of a user.

According to a fourth aspect of the present disclosure, there is provided an image reading apparatus according to the second aspect, in which the switching may be performed based on information indicating a diagnostic item using the reading result in the in-paper region.

According to a fifth aspect of the present disclosure, there is provided an image reading apparatus according to the first aspect, in which the image in the out-of-paper region may be provided at a position corresponding to any one of four sides of the paper.

According to a sixth aspect of the present disclosure, there is provided an image reading apparatus according to any one of the second to fifth aspects, in which the image is provided such that the reading result in the out-of-paper region may be an image extending in a direction of a side intersecting a direction of the relative movement.

According to a seventh aspect of the present disclosure, there is provided an image reading apparatus according to any one of the second to fifth aspects, in which the image in the out-of-paper region may be provided such that the reading result in the out-of-paper region is an image extending in a direction of the relative movement.

According to an eighth aspect of the present disclosure, there is provided an image reading apparatus according to the sixth or seventh aspect, in which the image in the out-of-paper region may have a feature for checking a light quantity.

According to a ninth aspect of the present disclosure, there is provided an image reading apparatus according to the sixth or seventh aspect, in which the image in the out-of-paper region may extend linearly in the direction of the relative movement.

According to a tenth aspect of the present disclosure, there is provided an image reading apparatus according to the sixth or seventh aspect, in which the image in the out-of-paper region may be an image arranged at equal intervals in the direction of the relative movement.

According to an eleventh aspect of the present disclosure, there is provided an information processing system including a processor configured to acquire a reading result of an in-paper region that is a region in which an image of paper is read, and a reading result of an out-of-paper region that is a region outside the paper and in which an image used for diagnosing the image of the paper is provided, and perform image quality diagnosis using the acquired reading result of the out-of-paper region, in performing image quality diagnosis on the acquired reading result of the in-paper region.

According to a twelfth aspect of the present disclosure, there is provided a program causing an information processing apparatus to realize a function of acquiring a reading result of an in-paper region that is a region in which an image of paper is read, and a reading result of an out-of-paper region that is a region outside the paper and in which an image used for diagnosing the image of the paper is provided, and a function of performing image quality diagnosis using the acquired reading result of the out-of-paper region, in performing image quality diagnosis on the acquired reading result of the in-paper region.

According to the first aspect of the present disclosure, it is possible to reduce the time and effort for a user to prepare a read image, as compared with a case where a diagnosis as to whether a detected defect is caused by an image forming apparatus or an image reading apparatus is performed by using a plurality of read images.

According to the second aspect of the present disclosure, it is possible to reduce a communication load as compared with a case where a transmission section that performs switching between a form of transmitting a reading result in an out-of-paper region and a form of transmitting only a reading result in an in-paper region, in transmitting the reading result in the in-paper region, is not provided.

According to the third aspect of the present disclosure, it is possible to perform transmission in a transmission form that reflects an intention of a user, as compared with a case where a configuration of switching a transmission form in a case where a reading result in an in-paper region is transmitted, by an operation of the user is not adopted.

According to the fourth aspect of the present disclosure, it is possible to reduce an operation load of a user as compared with a case where a configuration in which a transmission form in a case where a reading result in an in-paper region is transmitted is performed based on information indicating a diagnostic item using the reading result in the in-paper region is not adopted.

According to the fifth aspect of the present disclosure, it is possible to reduce the size of an out-of-paper region as compared with a case where a configuration in which an image in the out-of-paper region is provided at a position corresponding to any one of four sides of paper is not adopted.

According to the sixth aspect of the present disclosure, it is possible to diagnose whether an image extending in the same direction as a direction of a relative movement is caused by an image forming apparatus or the image reading apparatus, as compared with a case where a configuration in which an image is provided such that a reading result in an out-of-paper region is an image extending in a direction of a side intersecting the direction of the relative movement is not adopted.

According to the seventh aspect of the present disclosure, it is possible to obtain a diagnosis result for a defect caused by inclined paper, with high accuracy, as compared with a case where a configuration in which an image in an out-of-paper region is provided such that a reading result in the out-of-paper region is an image extending in a direction of a relative movement is not adopted.

According to the eighth aspect of the present disclosure, it is possible to check a light quantity with high accuracy as compared with a case where a configuration in which an image in an out-of-paper region has a feature for checking the light quantity is not adopted.

According to the ninth aspect of the present disclosure, it is possible to check straightness of movement with high accuracy as compared with a case where a configuration in which an image in an out-of-paper region extends linearly in a direction of a relative movement is not adopted.

According to the tenth aspect of the present disclosure, it is possible to check fluctuation of a movement speed with high accuracy as compared with a case where a configuration in which an image in an out-of-paper region is an image arranged at equal intervals in a direction of a relative movement is not adopted.

According to the eleventh aspect of the present disclosure, it is possible to reduce the time and effort for a user to prepare a read image, as compared with a case where a diagnosis as to whether a detected defect is caused by an image forming apparatus or an image reading apparatus is performed by using a plurality of read images.

According to the twelfth aspect of the present disclosure, it is possible to reduce the time and effort for a user to prepare a read image, as compared with a case where a diagnosis as to whether a detected defect is caused by an image forming apparatus or an image reading apparatus is performed by using a plurality of read images.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram illustrating an example of a hardware configuration of an information processing unit provided in a server apparatus and an image forming apparatus;
Fig. 3 is a diagram illustrating the image forming apparatus;
Fig. 4 is a block diagram illustrating a functional configuration of a CPU in the image forming apparatus;
Figs. 5A and 5B are diagrams illustrating a reading region provided in an image reading apparatus, in which Fig. 5A illustrates a first configuration example and Fig. 5B illustrates a second configuration example;
Figs. 6A to 6C are diagrams illustrating an example of a read image obtained by reading chart paper placed in the reading region, in which Fig. 6A illustrates a read image example in a first configuration example, and Figs. 6Band 6C illustrate a read image example in a second configuration example;
Figs. 7A to 7C are diagrams illustrating a transmission image by an interface unit, in which Figs. 7A and 7B illustrate a transmission image and Fig. 7C illustrates another transmission image;
Figs. 8A to 8C are diagrams illustrating a first modification example, in which Fig. 8A illustrates a read image example, and Figs. 8B and 8C illustrate a configuration of an image reading apparatus;
Figs. 9A to 9C are diagrams illustrating a second modification example, in which Fig. 9A illustrates a read image example, and Figs. 9B and 9C illustrate a configuration of an image reading apparatus;
Figs. 10A and 10B are diagrams illustrating a third modification example, in which Fig. 10A illustrates a read image example, and Fig. 10B illustrates a configuration of an image reading apparatus;
Fig. 11 is a diagram illustrating an image reading apparatus according to a fourth modification example; and
Figs. 12A and 12B are diagrams illustrating a display example of an image quality diagnosis result of a display device, in which Fig. 12A illustrates an example and Fig. 12B illustrates another example.

### DETAILED DESCRIPTION OF THE INVENTION

Hereinafter, an exemplary embodiment of the present invention will be described with reference to the accompanying drawings.

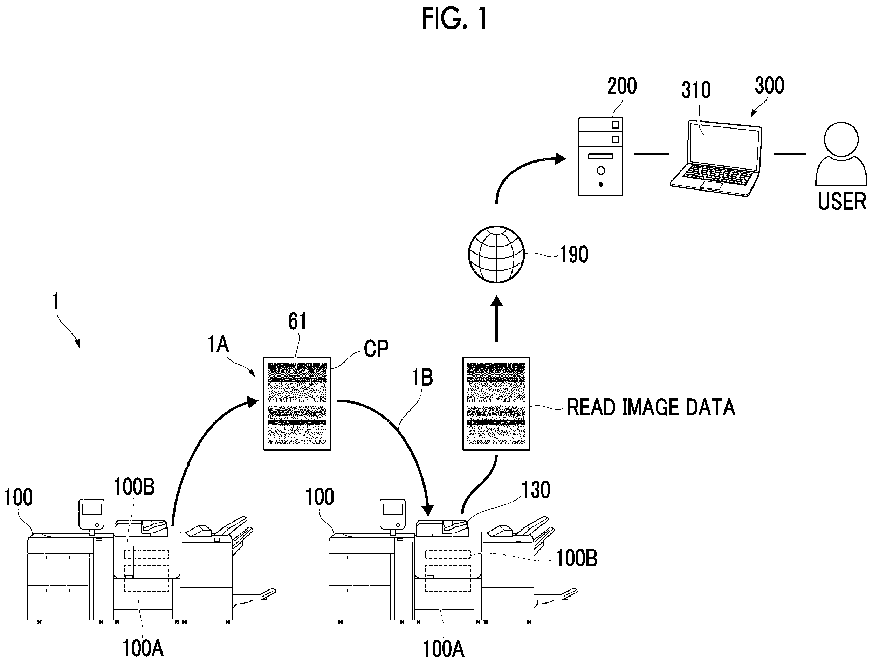

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 190. In the present exemplary embodiment, in the server apparatus 200 as an example of an information processing system and an example of an information processing apparatus, diagnosis of each image forming apparatus 100 is performed.

Further, the diagnosis system 1 in the present exemplary embodiment is provided with a user terminal 300 that is connected to the server apparatus 200 and receives an operation from a user.

In Fig. 1, two image forming apparatuses 100 among a plurality of image forming apparatuses 100 are displayed.

The user terminal 300 is provided with a display device 310. The user terminal 300 is realized by a computer. Examples of the form of the user terminal 300 include a personal computer (PC), a smartphone, and a tablet terminal.

The image forming apparatus 100 is provided with an image forming unit 100A as an example of an image forming section that forms an image on paper which is an example of a recording medium.

For example, the formation of an image on paper by the image forming unit 100A is performed by an inkjet method or an electrophotographic method. In addition, the formation of an image on paper by the image forming unit 100A is not limited to the inkjet method or the electrophotographic method, but may be performed by other methods.

The image forming apparatus 100 is further provided with an information processing unit 100B. The information processing unit 100B executes various processes executed in the image forming apparatus 100.

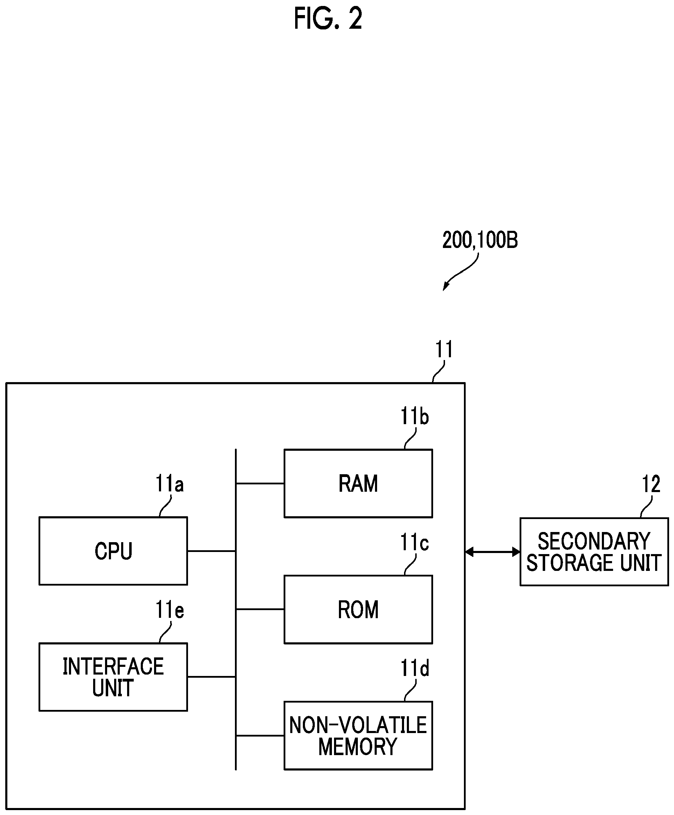

Fig. 2 is a diagram illustrating an example of a hardware configuration of the information processing unit 100B provided in the server apparatus 200 and the image forming apparatus 100. The information processing unit 100B provided in the server apparatus 200 and the image forming apparatus 100 is realized by a computer.

Each of the server apparatus 200 and the information processing unit 100B includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case in which power supply is interrupted and an interface unit 11e that controls each unit, such as a communication unit, connected to the arithmetic processing unit 11.

The non-volatile memory 11d is configured by, for example, an SRAM or a flash memory that is backed up by a battery. The secondary storage unit 12 stores the programs executed by the arithmetic processing unit 11 in addition to files and the like.

In the present exemplary embodiment, the arithmetic processing unit 11 reads the program stored in the ROM 11c or the secondary storage unit 12 to perform each process.

The program executed by the CPU 11a can be provided to the server apparatus 200 and the information processing unit 100B in a state in which the program is stored in a computer-readable recording medium such as a magnetic recording medium (for example, a magnetic tape or a magnetic disk), an optical recording medium (for example, an optical disk), a magnetooptical recording medium, or a semiconductor memory. Further, the program executed by the CPU 11a may be provided to the server apparatus 200 and the information processing unit 100B by a communication unit such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among the processes described below is executed by the CPU 11a as an example of the processor provided in the image forming apparatus 100.

The process executed by the server apparatus 200 among the processes described below is executed by the CPU 11a as an example of the processor provided in the server apparatus 200.

Further, the process for diagnosing the image forming apparatus 100 among the processes described below is executed by the server apparatus 200 as an example of the information processing system. The information processing system that executes the process for diagnosing the image forming apparatus 100 may be realized by one apparatus such as one server apparatus 200, or may be realized by a plurality of apparatus.

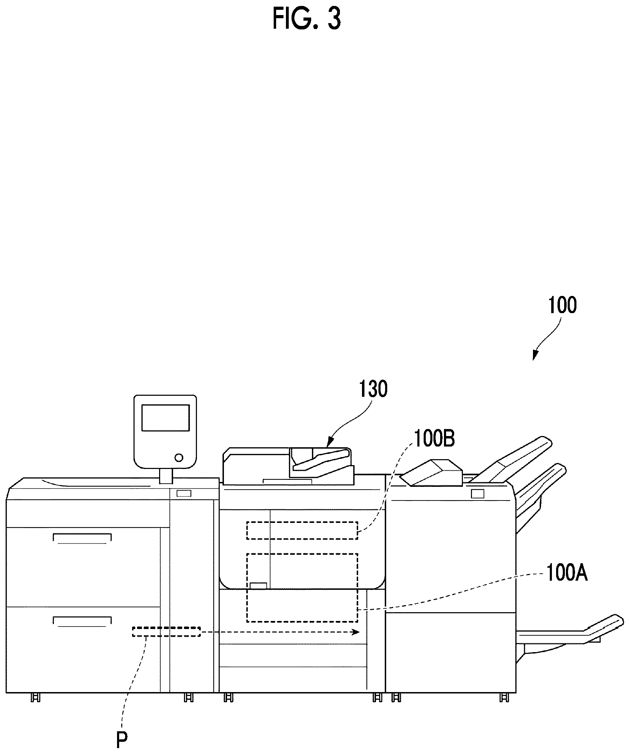

Fig. 3 is a diagram illustrating the image forming apparatus 100.

In the present exemplary embodiment, as described above, the image forming apparatus 100 is provided with the image forming unit 100A that forms an image on paper P which is an example of a recording medium.

In the present exemplary embodiment, in a case where the paper P passes through the image forming unit 100A, the paper P passes through the image forming unit 100A in a state where one side of the paper P faces the image forming unit 100A.

Further, the image forming apparatus 100 is provided with an image reading apparatus 130 as an example of an image reading section that reads the image formed on the recording medium such as the paper P.

Such an image reading apparatus 130 is a so-called scanner having a function of transporting the paper P. The image reading apparatus 130 includes a light source that emits light to paper P and a light receiving unit such as a CCD, that receives reflected light from the paper P. In the present exemplary embodiment, read image data described later is generated based on the reflected light received by the light receiving unit.

A reading position of an image is set in advance in the image reading apparatus 130, and the image reading apparatus 130 reads an image at a portion of paper P that is sequentially transported, which is located at the reading position.

The image forming apparatus 100 has an information transmission function of transmitting information to the server apparatus 200 (see Fig. 1).

In the example illustrated in Fig. 3, the image reading apparatus 130 is provided above the image forming apparatus 100. The image reading apparatus 130 sequentially reads paper (not illustrated) set by the user. The paper is not limited to paper on which an image is formed by the image forming apparatus 100, and may be paper on which an image is formed by another image forming apparatus.

An installation form of the image reading apparatus 130 is not limited to the form illustrated in Fig. 3. The image reading apparatus 130 may be provided inside the image forming apparatus 100 and on a transport path of paper P.

In this case, the paper P on which an image is formed by the image forming unit 100A sequentially passes through the image reading apparatus 130, and at the time of passing through the paper P, each image of the paper P is read in order.

In the present exemplary embodiment, the image reading apparatus 130 is provided with a paper reversing mechanism so that the paper can be supplied after the front and back sides have been reversed with respect to the reading position of the image.

Thus, in the present exemplary embodiment, the paper on which an image formed on one side is read can be reversed and supplied to the reading position again. As a result, images on the front and back sides of the paper can be read.

In addition, in reading an image on paper, the paper is placed on a platen (not illustrated) configured by plate-shaped glass or the like so that the paper placed on the platen may be read.

Further, each image forming apparatus 100 is provided with an operation reception unit that receives an operation from the user. The operation reception unit is configured by a so-called touch panel. The operation reception unit displays information for the user and receives an operation performed by the user.

The display of information for the user and the reception of the operation by the user are not limited to being performed by one operation reception unit as in the present exemplary embodiment. The operation reception unit and the information display unit may be provided separately.

In the present exemplary embodiment, in a case in which the image forming apparatus 100 (see Fig. 1) is diagnosed, first, the image forming unit 100A is operated to form a chart image 61 (see Fig. 1) on paper. Thus, as indicated by the reference sign 1A in Fig. 1, chart paper CP which is the paper on which a chart image 61 that is an example of a diagnosis image has been formed is generated.

A chart image 61 is an image used to diagnose the image forming apparatus 100. In the present exemplary embodiment, the chart paper CP which is the paper on which the chart image 61 used for the diagnosis has been formed is generated.

In a case where the chart paper CP is generated, the chart paper CP is installed on the image reading apparatus 130 as indicated by the reference sign 1B in Fig. 1. The image reading apparatus 130 is used to read the chart paper CP on which the chart image 61 is formed.

As a result, read image data obtained by reading the chart paper CP is generated.

In the present exemplary embodiment, the read image data is transmitted to the server apparatus 200 and then is stored in the server apparatus 200. The server apparatus 200 diagnoses the image forming apparatus 100 based on the read image data.

In the present exemplary embodiment, a user who uses the diagnosis system 1 in the present exemplary embodiment, such as a maintainer who maintains the image forming apparatus 100, accesses the server apparatus 200 and refers to the result of the diagnosis by the server apparatus 200.

In each image forming apparatus 100, as described above, the chart paper CP is generated and the chart paper CP is read, and thus the read image data is generated.

Such read image data is transmitted to the server apparatus 200. As described above, in the present exemplary embodiment, the server apparatus 200 diagnoses the image forming apparatus 100.

A diagnosis process executed by the server apparatus 200 will be described.

In the present exemplary embodiment, the CPU 11a (see Fig. 2) as an example of the processor provided in the server apparatus 200 diagnoses the image forming apparatus 100 based on the above-described read image data transmitted from the image forming apparatus 100, and then acquires the diagnosis result which is the result of the diagnosis.

More specifically, the CPU 11a acquires a diagnosis result for each of a plurality of diagnostic items, which is a diagnosis result for the chart image 61 that is the image formed on the chart paper CP.

In the present exemplary embodiment, a plurality of diagnostic items are predetermined. The CPU 11a in the server apparatus 200 analyzes the chart image 61 included in the read image data, and acquires a diagnosis result for each of the plurality of diagnostic items.

More specifically, for example, the CPU 11a in the server apparatus 200 acquires the diagnosis result for each of the diagnostic items based on a difference between the reference value predetermined for each of the plurality of diagnostic items and the value obtained by analyzing the chart image 61.

The CPU 11a in the server apparatus 200 acquires a diagnosis result having a worse evaluation as the difference increases.

Then, the CPU 11a rearranges a plurality of acquired diagnosis results so that the plurality of acquired diagnosis results are arranged in a predetermined order.

More specifically, in rearranging the plurality of diagnosis results, the CPU 11a rearranges a plurality of the diagnosis results so that, for example, a plurality of the diagnosis results are arranged in an order of a bad evaluation or a good evaluation.

Then, the CPU 11a generates a screen in which the plurality of diagnosis results are arranged in a predetermined order.

Next, a configuration for, in a case where a defect is determined in the diagnosis result, distinguishing whether the defect is caused by the image forming unit 100A (see Fig. 3) that forms an image on paper or caused by the image reading apparatus 130 (see Fig. 3) that reads an image on the paper will be described. Such a configuration is realized by the image reading apparatus 130 and the CPU 11a in the image forming apparatus 100.

In the present exemplary embodiment, the server apparatus 200 acquires the read image data from the image forming apparatus 100, and the server apparatus 200 executes the diagnosis process. The present disclosure is not limited to this, and the image forming apparatus 100 itself may execute the diagnosis process without transmission of the read image data.

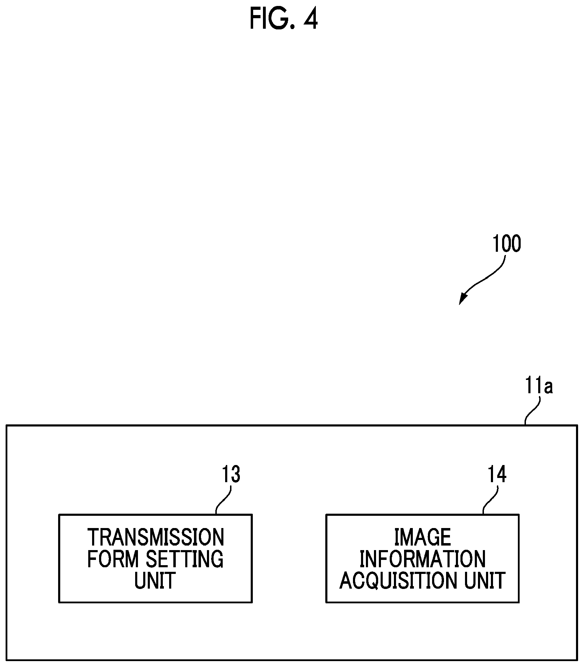

Fig. 4 is a block diagram illustrating a functional configuration of the CPU 11a in the image forming apparatus 100.

As illustrated in Fig. 4, the CPU 11a includes a transmission form setting unit 13 and an image information acquisition unit 14.

The transmission form setting unit 13 sets a form in which the reading result of the image reading apparatus 130 is transmitted to the server apparatus 200 that executes the diagnosis process.

The image information acquisition unit 14 acquires image information as the reading result of the image reading apparatus 130. The image information acquisition unit 14 sets the acquired image information into a transmission form set by the transmission form setting unit 13. The image information in such a transmission form is transmitted to the server apparatus 200 (see Fig. 1) via the interface unit 11e.

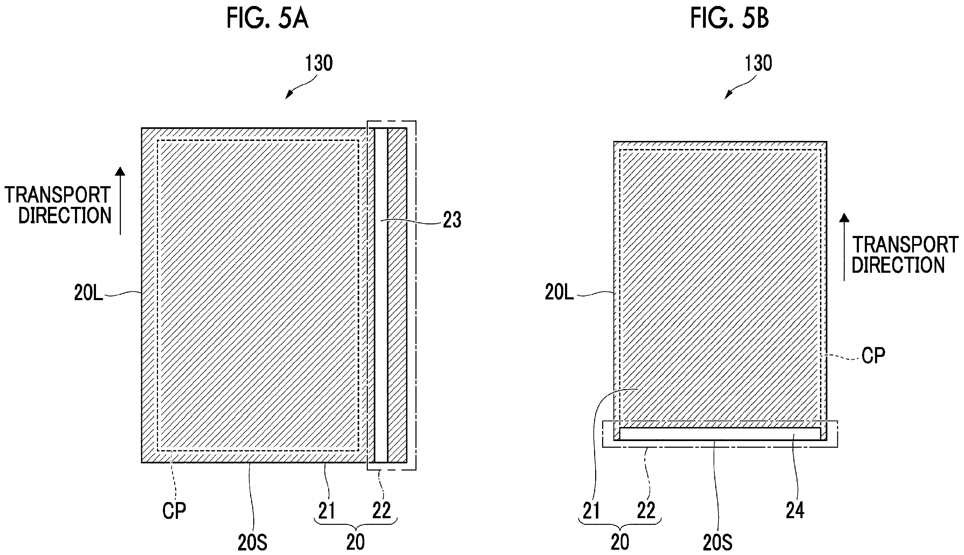

Next, the configuration of the image reading apparatus 130 (see Fig. 3) will be described with reference to Fig. 5.

Figs. 5A and 5B are diagrams illustrating a reading region 20 provided in the image reading apparatus 130, in which Fig. 5A illustrates a first configuration example and Fig. 5B illustrates a second configuration example.

The reading region 20 illustrated in Figs. 5A and 5B includes an in-paper region 21 that is a region in which the chart image 61 (see Fig. 1) of chart paper CP is read, and an out-of-paper region 22 that is a region outside the in-paper region 21. The outer shape of the chart paper CP is indicated by the broken line in the in-paper region 21.

In the reading region 20 indicated by the diagonal lines in Figs. 5A and 5B, there is no region in which the in-paper region 21 and the out-of-paper region 22 overlap. Further, in Figs. 5A and 5B, the boundary between the in-paper region 21 and the out-of-paper region 22 is indicated by the frame line of a one-dot chain line indicating the out-of-paper region 22. This is just an example.

The in-paper region 21 of the reading region 20 has a size required to read the chart image 61 (see Fig. 1) of the chart paper CP. The size of the in-paper region 21 may be larger than the chart image 61, for example, substantially equal to the dimensions of the outer shape of the chart paper CP. In addition, a margin may be provided around the outer shape of the chart paper CP to be larger than the outer shape of the chart paper CP.

The out-of-paper region 22 of the reading region 20 is a region outside the chart paper CP and is provided adjacent to the in-paper region 21.

The out-of-paper region 22 is provided on any one of four sides of the in-paper region 21. That is, in the first configuration example of Fig. 5A, the out-of-paper region 22 is provided on a side of the reading region 20, that extends in a transport direction. In the second configuration example of Fig. 5B, the out-of-paper region 22 is provided on a side thereof extending in a direction intersecting the transport direction. As described above, the relative positional relationship between the in-paper region 21 and the out-of-paper region 22 is different between the first configuration example and the second configuration example. Although not illustrated, the reading region 20 may be configured to include both the out-of-paper region 22 in the first configuration example and the out-of-paper region 22 in the second configuration example.

In the reading region 20 in Figs. 5A and 5B, the long side of the four sides of a rectangle is referred to as a long side 20L, and the short side is referred to as a short side 20S. The long side 20L and the short side 20S of the reading region 20 can be referred to as the long side and the short side of the in-paper region 21, and can be referred to as the long side and the short side of the out-of-paper region 22. Further, the long side 20L and the short side 20S can be referred to as the long side and the short side of the chart paper CP in a case where the chart paper CP is located in the in-paper region 21.

The reading region 20 of the image reading apparatus 130 will be described more specifically.

As illustrated in Fig. 5A, the out-of-paper region 22 in the first configuration example is provided at a position corresponding to a long side 20L. A linear image 23 extending in a direction of the long side 20L is provided in the out-of-paper region 22.

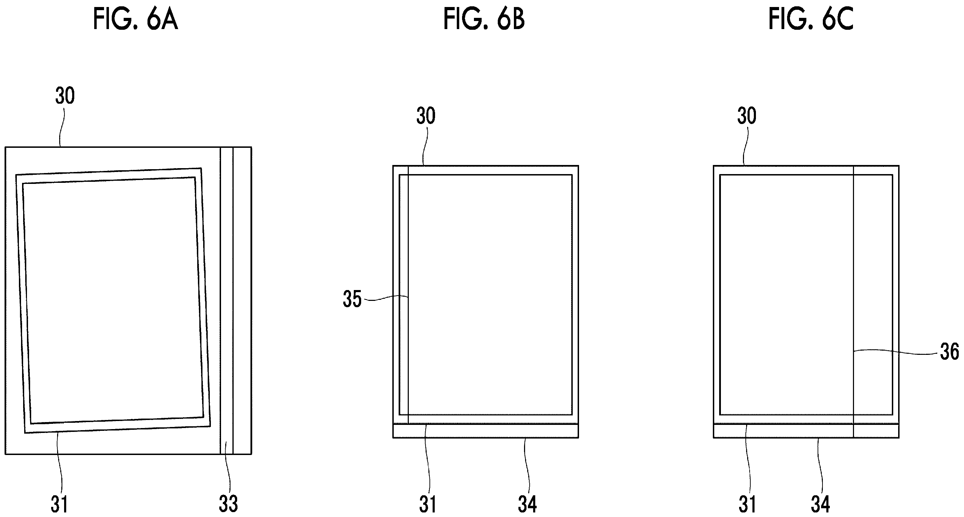

The image 23 extends in the transport direction of the chart paper CP. As described above, the image 23 is provided in the out-of-paper region 22 in the first configuration example such that a read image example 30 (see, for example, Fig. 6A) is a straight image 33 extending in the direction of the long side of the chart paper CP.

Further, as illustrated in Fig. 5B, the out-of-paper region 22 in the second configuration example is provided at a position corresponding to a short side 20S, differing from the first configuration example. A linear image 24 extending in the same direction as a direction in which the short side 20S extends is provided in the out-of-paper region 22.

The image 24 extends in a direction intersecting the transport direction of the chart paper CP, and is provided such that the read image example 30 (see, for example, Fig. 6B) is a straight image 34 extending in the direction of the short side of the chart paper CP.

The image 23 in the first configuration example and the image 24 in the second configuration example are examples of an image used for diagnosis.

The colors or patterns of the image 23 in the first configuration example are different from the colors or patterns of the image 24 in the second configuration example. The image 23 may be set to be white and the image 24 may be set to be black. This is because the images 23 and 24 perform different functions in diagnosis, and may perform the same function. Details of each function of the images 23 and 24 will be described later.

Next, the read image example 30 that is an image example of the chart paper CP placed in the reading region 20 of the image reading apparatus 130 will be described with reference to Fig. 6.

Figs. 6A to 6C are diagrams illustrating an example of the read image example 30 obtained by reading the chart paper CP placed in the reading region 20, in which Fig. 6A illustrates a read image example 30 in the first configuration example, and Figs. 6Band 6C illustrate a read image example 30 in the second configuration example.

Each of the read image examples 30 illustrated in Figs. 6A to 6C includes a paper image 31 corresponding to the chart paper CP (refer to the broken line portion in Fig. 5A or 5B) of the in-paper region 21.

Further, the read image example 30 illustrated in Fig. 6A includes not only the paper image 31, but also a straight image 33 corresponding to the linear image 23 (see Fig. 5A) in the out-of-paper region 22. The read image example 30 illustrated in Figs. 6B and 6C includes not only the paper image 31, but also a straight image 34 corresponding to the linear image 24 (see Fig. 5B) in the out-of-paper region 22.

A more specific description will be made.

In the read image example 30 illustrated in Fig. 6A, the paper image 31 corresponding to the chart paper CP is inclined with respect to the straight image 33. That is, the long side of the paper image 31 is not parallel to a direction in which the straight image 33 extends. Therefore, according to the read image example 30, it is possible to detect that the chart paper CP is read in the inclined state in the in-paper region 21 (see Fig. 5A), and to grasp that a defect due to the diagnosis is caused by the image reading apparatus.

The image 23 (see Fig. 5A) corresponding to the straight image 33 can be referred to as a diagnostic feature for diagnosing a paper state of the image reading apparatus. The server apparatus 200 diagnoses the paper state.

In the read image example 30 illustrated in Fig. 6B, a defective image 35 extending in a streak shape appears. Although the defective image 35 appears in the paper image 31 corresponding to the chart paper CP, the defective image 35 does not appear in the straight image 34 corresponding to the linear image 24 (see Figs. 5A and 5B). That is, the defective image 35 is obtained by reading the defective image formed on the chart image 61 (see Fig. 1) of the chart paper CP. Therefore, according to the read image example 30, it is possible to detect that the defective image 35 is not caused by the image reading apparatus 130 but is caused by the image forming unit 100A (see Fig. 3) that forms the chart image 61.

The image 24 (see Fig. 5B) corresponding to the straight image 34 can refer to a streak detection feature for diagnosing the cause of the detected streak-shaped image.

In the read image example 30 illustrated in Fig. 6C, a defective image 36 extending in a streak shape appears. The defective image 36 appears in both the paper image 31 and the straight image 34, differing from the defective image 35 described above. That is, the defective image 36 is not based on the defective image shown in the chart image 61 (see Fig. 1), and is formed by the image reading apparatus 130. Therefore, according to the read image example 30, it is possible to detect that the defective image 36 is not caused by the image forming unit 100A (see Fig. 3) that forms the chart image 61, but is caused by the image reading apparatus 130.

Since such a defective image 36 is an image having a bright color, the image 24 (see Fig. 5B) may be set to have a dark color, for example, a black color.

Here, in the server apparatus 200, according to the read image example 30 in any one of Figs. 6A to 6C, it is possible to diagnose that there is a defect in the chart image 61 which is a diagnosis target, and diagnose whether the defect is caused by the image forming unit 100A or the image reading apparatus 130. That is, in the case of the read image example 30 in Fig. 6A, the defect is caused by the image reading apparatus 130. Further, in the case of the read image example 30 of Fig. 6B, the defect is caused by the image forming unit 100A. In the case of the read image example 30 of Fig. 6C, the defect is caused by the image reading apparatus 130.

As described above, by using one read image example 30, it is possible to specify which of the image forming unit 100 A and the image reading apparatus 130 causes the defect, and thus it is possible to reduce the time and effort of the user as compared with a case where a plurality of read images are prepared.

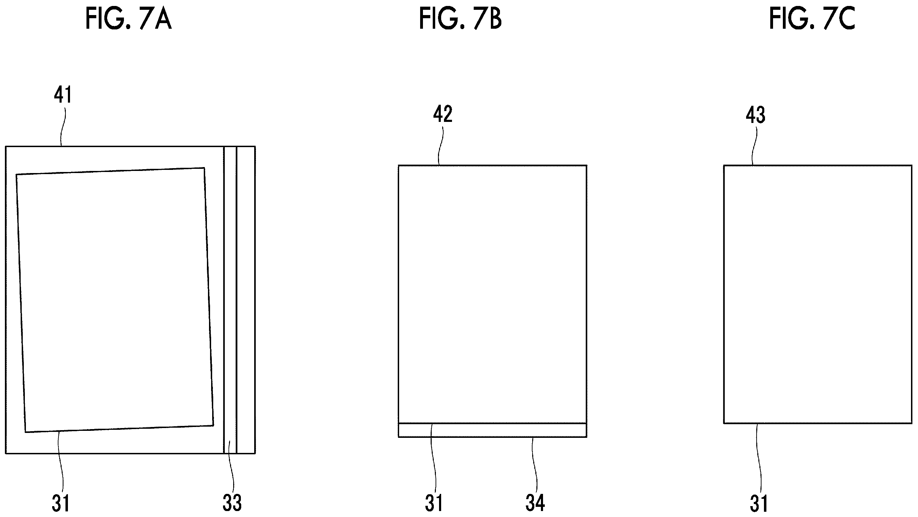

Figs. 7Ato 7C are diagrams illustrating transmission images 41, 42, and 43 transmitted to the server apparatus 200, in which Fig. 7A illustrates the transmission image 41, Fig. 7B illustrates another transmission image 42, and Fig. 7C illustrates the other transmission image 43. The transmission images 41 to 43 are created by the image information acquisition unit 14 of the CPU 11a described above, and are transmitted to the server apparatus 200 by the interface unit 11e (see Fig. 2).

The transmission images 41 to 43 are examples of the reading result of the image reading apparatus 130 (see Fig. 3). The interface unit 11e is an example of a transmission section that transmits the reading results together with the CPU 11a.

The transmission image 41 illustrated in Fig. 7A includes not only the paper image 31 but also the straight image 33. The transmission image 42 illustrated in Fig. 7B includes the paper image 31 and the straight image 34.

On the other hand, although the transmission image 43 illustrated in Fig. 7C includes the paper image 31, the transmission image 43 includes neither the straight image 33 nor 34.

As described above, the transmission images 41 and 42 include the paper image 31, and the straight image 33 or the straight image 34, and the transmission image 43 includes only the paper image 31.

Further, the transmission image 41 is an image in a case where the image reading apparatus 130 (see Fig. 3) is the first configuration example (see Fig. 5A). The transmission image 42 is an image in a case where the image reading apparatus 130 is the second configuration example (see Fig. 5B).

On the other hand, the transmission image 43 can be set to have the transmission content regardless of whether the image reading apparatus 130 is the first configuration example or the second configuration example.

In other words, in a case where the image reading apparatus 130 (see Fig. 3) is the first configuration example (see Fig. 5A), either the transmission image 41 or the transmission image 43 is used. In the case of the second configuration example (see Fig. 5B), either the transmission image 42 or the transmission image 43 is used.

Here, in the image forming apparatus 100, in a case where information indicating whether the image reading apparatus is the first configuration example or the second configuration example is stored in, for example, the ROM 11c (see Fig. 2), the CPU 11a acquires such information by reading the information from the ROM 11c. In the case of the first configuration example, the transmission form setting unit 13 determines whether to transmit the transmission image 41 or the transmission image 43. In the case of the second configuration example, the transmission form setting unit 13 determines whether to transmit the transmission image 42 or the transmission image 43.

As described above, the transmission form setting unit 13 switches a form of transmitting the reading result to the server apparatus 200, between a form of transmitting the transmission images 41 and 42 including the paper image 31 as the reading result of the in-paper region 21 and the straight images 33 and 34 as the reading result of the out-of-paper region 22, and a form of transmitting the transmission image 43 including only the paper image 31. Such switching is performed in order to determine whether or not the transmission form including the straight images 33 and 34 as the reading result of the out-of-paper region 22 is set.

The above-described image information acquisition unit 14 acquires the information of the read image in a form predetermined by the transmission form setting unit 13. The acquired information of the image is transmitted to the server apparatus 200 (see Fig. 1) by the interface unit 11e (see Fig. 2) and is used for diagnosis.

Here, the transmission form setting unit 13 may use, as information for determining the transmission form, information indicating an operation result of the user, or may use information indicating a diagnostic item in the diagnosis process executed by the server apparatus 200.

That is, in a case where the user needs to specify whether the cause of the defect is the image reading apparatus 130 or the image forming unit 100A, the user instructs the transmission images 41 and 42 to be transmitted by an operation by an operation unit (not illustrated). Further, in a case where it is considered that such a necessity is not necessary, the user instructs the transmission image 43 to be transmitted by an operation of the operation unit (not illustrated). The transmission form setting unit 13 switches the transmission form in response to the operation instruction. This is a manual switching of transmission forms.

The transmission form setting unit 13 acquires information indicating a diagnostic item using the reading result in the in-paper region 21 by the server apparatus 200, and automatically switches the transmission form in accordance with the acquired information. For example, in a case where the diagnostic items are only items that are not related to the inclination of the image or the presence or absence of the defective image, the transmission image 43 (see Fig. 7C) is transmitted, so that the amount of data to be transmitted is reduced, and it is possible to reduce the processing load of the server apparatus 200.

Next, a modification example to which the present exemplary embodiment is applied will be described. More specifically, various modification examples in a case where the reading region 20 is the first configuration example (see Fig. 5A) will be described below.

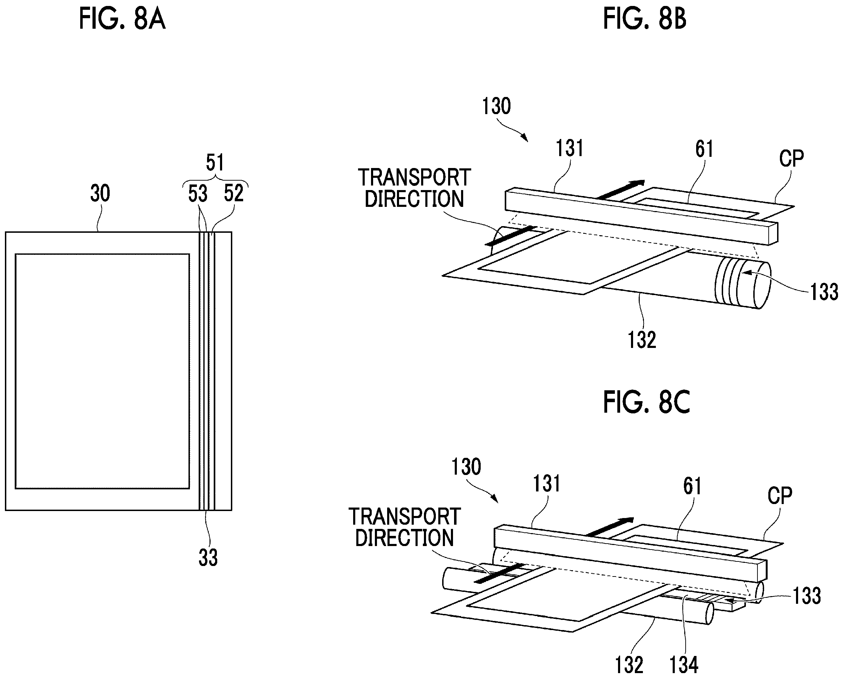

Figs. 8A to 8C are diagrams illustrating a first modification example, in which Fig. 8A illustrates a read image example 30, and Figs. 8B and 8C illustrate a configuration of an image reading apparatus 130.

In the first modification example illustrated in Fig. 8A, the straight image 33 of the read image example 30 includes a feature image 51 for determining a light quantity of the image reading apparatus 130.

The feature image 51 includes a feature portion 52 for detecting the light quantity and white balance, and a feature portion 53 for detecting a reference color. The feature portion 52 is a straight line on the right side of three vertical columns, and the feature portion 53 is a straight line on the center side and a straight line on the left side. A white image is formed in the feature portion 52, and an image having a reference color to be detected is formed in the feature portion 53. Thus, the number of straight lines to be provided varies depending on the number of the reference colors.

By transmitting the read image example 30 including the feature image 51 to the server apparatus 200, it is possible to correct the density in the in-paper region 21 and then perform diagnosis. In a case where the density abnormality is detected, it is possible to determine whether the density abnormality is caused by image formation or image reading.

The configuration of the image reading apparatus 130 may be illustrated in Fig. 8B or Fig. 8C. In either case, the chart paper CP is transported to a reading position by a plurality of transporting members. Hereinafter, each case will be described.

As illustrated in Fig. 8B, the image reading apparatus 130 includes a reading unit 131 and a transport roller 132. The reading unit 131 includes a light source that emits light emitted toward the chart image 61 of the chart paper CP and a light receiving unit that receives the reflected light. The transport roller 132 is provided at a position facing the reading unit 131 as one of the plurality of transporting members. Thus, the chart image 61 of the chart paper CP is read by the relative movement to the chart paper CP.

An image 133 is provided in a region of the transport roller 132 corresponding to the out-of-paper region 22. An image 133 corresponds to the image 23 (see Fig. 5A) in the present exemplary embodiment described above, and is an image for forming the above-described feature image 51 in image reading. That is, the image 133 is provided to extend over the entire circumference in the circumferential direction of the transport roller 132. In a case where the image 133 is read in a case where the transport roller 132 is rotating, the read image is the straight image 33 (see Fig. 8A) including the linear feature image 51.

The image 133 of the transport roller 132 is an example of an image having a feature for checking the light quantity.

The image reading apparatus 130 illustrated in Fig. 8C includes a reference plate 134 located behind the transport roller 132 in the transport direction in addition to the reading unit 131 described above and the transport roller 132 described above.

The image 133 is provided in a flat region of the reference plate 134 corresponding to the out-of-paper region 22. The image 133 of the reference plate 134 is the same as the image 133 illustrated in Fig. 8B described above. That is, the image 133 is provided on the transport roller 132 in Fig. 8B and is provided on the reference plate 134 in Fig. 8C.

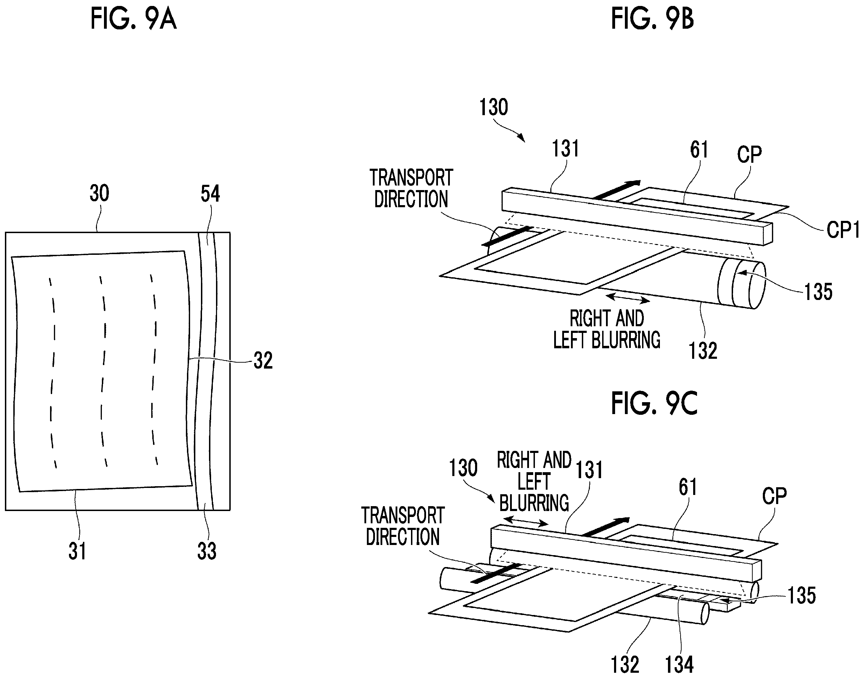

Figs. 9A to 9C are diagrams illustrating a second modification example, in which Fig. 9A illustrates a read image example 30, and Figs. 9B and 9C illustrate a configuration of an image reading apparatus 130 (see Fig. 3).

In the second modification example illustrated in Fig. 9A, the straight image 33 of the read image example 30 includes a feature image 54 for determining the straightness in paper transport of the image reading apparatus 130. The feature image 54 is an image extending in the transport direction, and is not linear but meandering in a direction intersecting the transport direction for a reason described later. Such a transport direction is the direction of the relative movement to the chart paper CP in image reading.

Further, the paper image 31 of the read image example 30 includes each color alignment image which is a chart image 61, and further includes a boundary portion 32 indicating a paper edge of the chart paper CP. Each color alignment image referred to here is an image for checking whether or not a positional deviation between the respective colors has occurred, and is an image in which the colors are arranged in order in a long side direction and the deviation in a short side direction is facilitated to be visually recognized.

Here, the configuration of the image reading apparatus 130 may be illustrated in Fig. 9B or Fig. 9C. An image 135 for forming the straight image 33 of the read image example 30 is formed on the peripheral surface of the transport roller 132 in Fig. 9B, and is formed on the flat surface of the reference plate 134 in Fig. 9C. Such an image 135 has a feature for checking the straightness.

The image 135 is an image having a feature for checking the straightness, and is an example of an image extending linearly in the direction of the relative movement.

Further, since the transport roller 132 does not have a straight portion extending in the transport direction, a paper edge CP1 of the chart paper CP is also used in order to check the straightness of the paper transport.

In Figs. 9B and 9C, portions common to those in Figs. 8B and 8C illustrating the case of the first modification example described above are denoted by the same reference signs, and descriptions of the common portions will not be repeated. The image 135 corresponds to the image 133 in the first modification example.

The description will be continued by returning to Fig. 9A.

In the read image example 30, the straight image 33 that is originally a linear image is not a straight line, and the boundary portion 32 indicating the paper edge CP1 of the chart paper CP is also meandering. In a case where the transport roller 132 meanders (see Fig. 9B) or the reading unit 131 meanders (see Fig. 9C) during image reading, there is a probability that the transport roller 132 shifts to the right or left as in the read image example 30.

As described above, according to the read image example 30 in Fig. 9A, it is possible to check that the transport roller 132 has right-left blurring in image reading, and to also check that the transported chart paper CP also meanders.

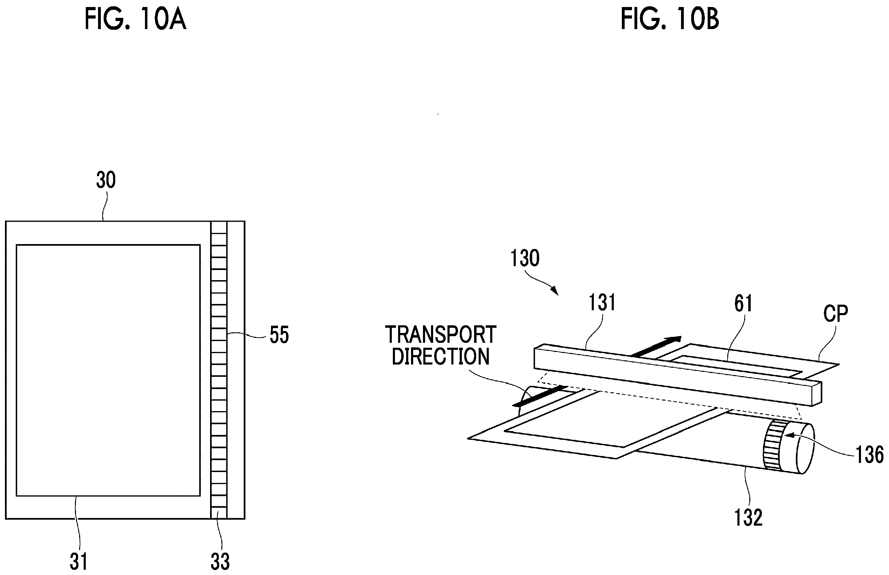

Figs. 10A and 10B are diagrams illustrating a third modification example, in which Fig. 10A illustrates a read image example 30, and Fig. 10B illustrates a configuration of an image reading apparatus 130 (see Fig. 3).

In the third modification example illustrated in Fig. 10A, the straight image 33 of the read image example 30 includes a feature image 55 for determining a fluctuation in the transport speed of the image reading apparatus 130.

The feature image 55 is a line extending in a width direction and a line arranged at intervals in a length direction.

Here, in the configuration of the image reading apparatus 130, as illustrated in Fig. 10B, an image 136 for forming a straight image 33 is formed on the transport roller 132. The image 136 has a feature for checking a fluctuation in the transport speed. More specifically, in the image 136, lines are provided at predetermined intervals in the circumferential direction of the transport roller 132. Such an interval is obtained by equally dividing the peripheral length, is equal over the entire circumference, and is an equal interval.

As a result, in a case where the transport speed does not fluctuate in the transport direction, the feature images 55 of the read image example 30 are at equal intervals. On the other hand, in a case where the transport speed fluctuates, a portion that does not have an equal interval appears in the feature image 55. As described above, according to the read image example 30 in Fig. 10A, it is possible to check whether or not the transport speed in image reading fluctuates.

In Fig. 10B, portions common to those in Figs. 8B and 8C illustrating the case of the first modification example described above are denoted by the same reference signs, and descriptions of the common portions will not be repeated. The image 136 corresponds to the image 133 in the first modification example.

The image 136 is an example of an image arranged at equal intervals in the direction of the relative movement in image reading.

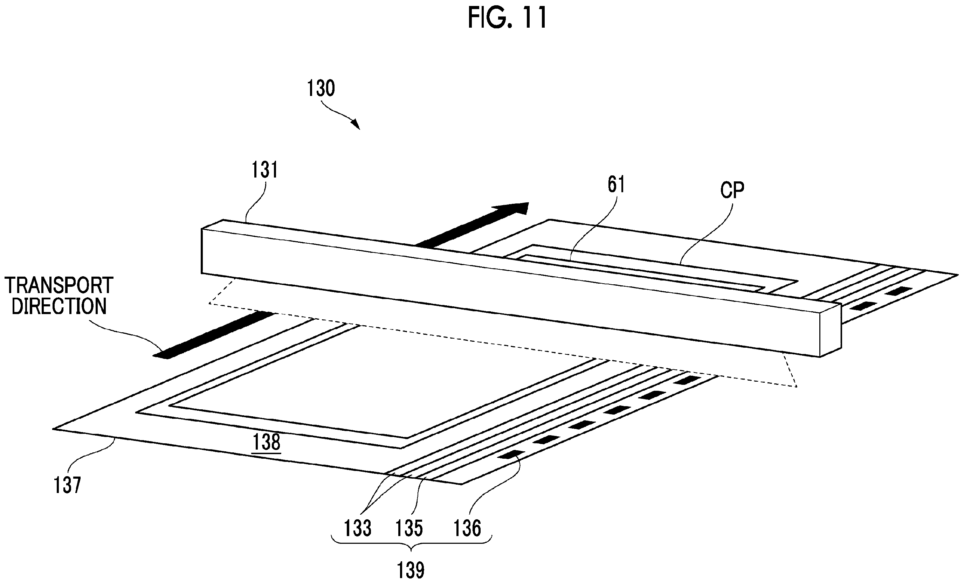

Fig. 11 is a diagram illustrating an image reading apparatus 130 according to a fourth modification example. Fig. 11 illustrates that a portion of the image forming apparatus 100 turns upside down.

As illustrated in Fig. 11, the image reading apparatus 130 includes a platen 137, a reading unit 131, and a document cover (not illustrated). The platen 137 has light transmittance and has an upper surface on which the chart paper CP is placed. The reading unit 131 is located on a lower surface 138 side of the platen 137 and moves with respect to the platen 137. The document cover covers the upper surface of the platen 137, and opens and closes the main body of the image reading apparatus 130.

Further, an image 139 is provided in the region of the platent 137. The image 139 is located at a position corresponding to the out-of-paper region 22 (see Figs. 5A and 5B).

The image 139 includes the above-described image 133 (see Fig. 8B or 8C) for checking the color, the light quantity, and the white balance, the above-described image 135 (see Fig. 9B or 9C) for checking the straightness in image reading, and the above-described image 136 (see Fig. 10B) for checking the speed fluctuation in the image reading described above.

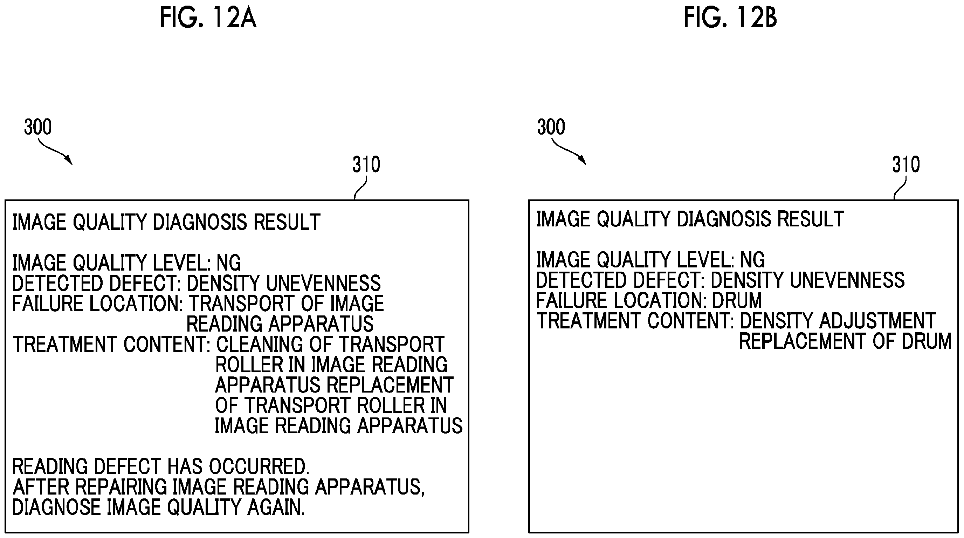

Next, a display example in a case where the diagnosis result of the chart image 61 is displayed on the display device 310 of the user terminal 300 will be described with reference to Fig. 12.

Figs. 12A and 12B are diagrams illustrating a display example of an image quality diagnosis result of the display device 310, in which Fig. 12A illustrates an example and Fig. 12B illustrates another example. More specifically, Fig. 12A illustrates an example in a case where the defect is caused by the image reading apparatus, and Fig. 12B illustrates another example in a case where the defect is caused by the image forming apparatus.

As a result of the image quality diagnosis, the display device 310 illustrated in Fig. 12A shows that there is a defect in image quality, an image quality level is "NG", and the detected defect is "density unevenness". The failure location is "transport of the image reading apparatus". That is, it is shown that the cause of the density unevenness is in the image reading apparatus and not in the image forming apparatus. Such cause specifying can be performed using the above-described read image example 30 (see, for example, Figs. 9A to 9C).

The treatment content is for the image reading apparatus, and indicates "cleaning of the transport roller in the image reading apparatus" and "replacement of the transport roller of the image reading apparatus". For example, there are cleaning of the transport roller 132 (see Figs. 9A to 9C) or replacement of components.

In addition, as a message to the user, " a reading defect has occurred. After repairing the image reading apparatus, diagnose the image quality again" is displayed. This facilitates the response of the user.

As a result of the image quality diagnosis, the display device 310 illustrated in Fig. 12B shows that there is a defect in image quality, the image quality level is "NG", the detected defect is "density unevenness", and the failure location is "drum", that is, the cause of the defect occurring is in the image forming apparatus and not in the image reading apparatus.

The treatment contents are "density adjustment" and "drum replacement".

### <Supplementary Note>

(((1))) An image reading apparatus comprising:
   a reading unit that reads an image of paper by a relative movement to the paper;
   an in-paper region that is a region in which the image of the paper is read by the reading unit; and
   an image that is provided in an out-of-paper region that is a region outside the paper and is used for diagnosing the image of the paper.
(((2))) The image reading apparatus according to (((1))), further comprising:
   a transmission section that transmits a reading result of the reading unit,
   wherein the transmission section performs switching between a form of transmitting the reading result in the out-of-paper region and a form of transmitting only the reading result in the in-paper region, in transmitting the reading result in the in-paper region.
(((3))) The image reading apparatus according to (((2))),
   wherein the switching is performed by an operation of a user.
(((4))) The image reading apparatus according to (((2))),
   wherein the switching is performed based on information indicating a diagnostic item using the reading result in the in-paper region.
(((5))) The image reading apparatus according to (((1))),
   wherein the image in the out-of-paper region is provided at a position corresponding to any one of four sides of the paper.
(((6))) The image reading apparatus according to any one of (((2))) to (((5))),
   wherein the image is provided such that the reading result in the out-of-paper region is an image extending in a direction of a side intersecting a direction of the relative movement.
(((7))) The image reading apparatus according to any one of (((2))) to (((5))),
   wherein the image in the out-of-paper region is provided such that the reading result in the out-of-paper region is an image extending in a direction of the relative movement.
(((8))) The image reading apparatus according to (((6))) or (((7))),
   wherein the image in the out-of-paper region has a feature for checking a light quantity.
(((9))) The image reading apparatus according to (((6))) or (((7))),
   wherein the image in the out-of-paper region extends linearly in the direction of the relative movement.
(((10))) The image reading apparatus according to (((6))) or (((7))),
   wherein the image in the out-of-paper region is an image arranged at equal intervals in the direction of the relative movement.
(((11))) An information processing system comprising:
   a processor configured to:
   acquire a reading result of an in-paper region that is a region in which an image of paper is read, and a reading result of an out-of-paper region that is a region outside the paper and in which an image used for diagnosing the image of the paper is provided; and
   perform image quality diagnosis using the acquired reading result of the out-of-paper region, in performing image quality diagnosis on the acquired reading result of the in-paper region.
(((12))) A program causing an information processing apparatus to realize:
   a function of acquiring a reading result of an in-paper region that is a region in which an image of paper is read, and a reading result of an out-of-paper region that is a region outside the paper and in which an image used for diagnosing the image of the paper is provided; and
   a function of performing image quality diagnosis using the acquired reading result of the out-of-paper region, in performing image quality diagnosis on the acquired reading result of the in-paper region.

According to the exemplary embodiment of the invention of (((1))), it is possible to reduce the time and effort for a user to prepare a read image, as compared with a case where a diagnosis as to whether a detected defect is caused by an image forming apparatus or an image reading apparatus is performed by using a plurality of read images.

According to the exemplary embodiment of the invention of (((2))), it is possible to reduce a communication load as compared with a case where a transmission section that performs switching between a form of transmitting a reading result in an out-of-paper region and a form of transmitting only a reading result in an in-paper region, in transmitting the reading result in the in-paper region, is not provided.

According to the exemplary embodiment of the invention of (((3))), it is possible to perform transmission in a transmission form that reflects an intention of a user, as compared with a case where a configuration of switching a transmission form in a case where a reading result in an in-paper region is transmitted, by an operation of the user is not adopted.

According to the exemplary embodiment of the invention of (((4))), it is possible to reduce an operation load of a user as compared with a case where a configuration in which a transmission form in a case where a reading result in an in-paper region is transmitted is performed based on information indicating a diagnostic item using the reading result in the in-paper region is not adopted.

According to the exemplary embodiment of the invention of (((5))), it is possible to reduce the size of an out-of-paper region as compared with a case where a configuration in which an image in the out-of-paper region is provided at a position corresponding to any one of four sides of paper is not adopted.

According to the exemplary embodiment of the invention of (((6))), it is possible to diagnose whether an image extending in the same direction as a direction of a relative movement is caused by an image forming apparatus or the image reading apparatus, as compared with a case where a configuration in which an image is provided such that a reading result in an out-of-paper region is an image extending in a direction of a side intersecting the direction of the relative movement is not adopted.

According to the exemplary embodiment of the invention of (((7))), it is possible to obtain a diagnosis result for a defect caused by inclined paper, with high accuracy, as compared with a case where a configuration in which an image in an out-of-paper region is provided such that a reading result in the out-of-paper region is an image extending in a direction of a relative movement is not adopted.

According to the exemplary embodiment of the invention of (((8))), it is possible to check a light quantity with high accuracy as compared with a case where a configuration in which an image in an out-of-paper region has a feature for checking the light quantity is not adopted.

According to the exemplary embodiment of the invention of (((9))), it is possible to check straightness of movement with high accuracy as compared with a case where a configuration in which an image in an out-of-paper region extends linearly in a direction of a relative movement is not adopted.

According to the exemplary embodiment of the invention of (((10))), it is possible to check fluctuation of a movement speed with high accuracy as compared with a case where a configuration in which an image in an out-of-paper region is an image arranged at equal intervals in a direction of a relative movement is not adopted.

According to the exemplary embodiment of the invention of (((11))), it is possible to reduce the time and effort for a user to prepare a read image, as compared with a case where a diagnosis as to whether a detected defect is caused by an image forming apparatus or an image reading apparatus is performed by using a plurality of read images.

According to the exemplary embodiment of the invention of (((12))), it is possible to reduce the time and effort for a user to prepare a read image, as compared with a case where a diagnosis as to whether a detected defect is caused by an image forming apparatus or an image reading apparatus is performed by using a plurality of read images.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

11a: CPU
11e: interface unit
13: transmission form setting unit
20: reading region
21: in-paper region
22: out-of-paper region
23, 24, 133, 135, 136, 139: image
61: chart image
100: image forming apparatus
130: image reading apparatus
131: reading unit
200: server apparatus
CP: chart paper

## Claims

1. An image reading apparatus comprising:
a reading unit that reads an image of paper by a relative movement to the paper;
an in-paper region that is a region in which the image of the paper is read by the reading unit; and
an image that is provided in an out-of-paper region that is a region outside the paper and is used for diagnosing the image of the paper.

2. The image reading apparatus according to claim 1, further comprising:
a transmission section that transmits a reading result of the reading unit,
wherein the transmission section performs switching between a form of transmitting the reading result in the out-of-paper region and a form of transmitting only the reading result in the in-paper region, in transmitting the reading result in the in-paper region.

3. The image reading apparatus according to claim 2,
wherein the switching is performed by an operation of a user.

4. The image reading apparatus according to claim 2,
wherein the switching is performed based on information indicating a diagnostic item using the reading result in the in-paper region.

5. The image reading apparatus according to claim 1,
wherein the image in the out-of-paper region is provided at a position corresponding to any one of four sides of the paper.

6. The image reading apparatus according to any one of claims 2 to 5,
wherein the image is provided such that the reading result in the out-of-paper region is an image extending in a direction of a side intersecting a direction of the relative movement.

7. The image reading apparatus according to any one of claims 2 to 5,
wherein the image in the out-of-paper region is provided such that the reading result in the out-of-paper region is an image extending in a direction of the relative movement.

8. The image reading apparatus according to claim 6 or 7,
wherein the image in the out-of-paper region has a feature for checking a light quantity.

9. The image reading apparatus according to claim 6 or 7,
wherein the image in the out-of-paper region extends linearly in the direction of the relative movement.

10. The image reading apparatus according to claim 6 or 7,
wherein the image in the out-of-paper region is an image arranged at equal intervals in the direction of the relative movement.

11. An information processing system comprising:
a processor configured to:
acquire a reading result of an in-paper region that is a region in which an image of paper is read, and a reading result of an out-of-paper region that is a region outside the paper and in which an image used for diagnosing the image of the paper is provided; and
perform image quality diagnosis using the acquired reading result of the out-of-paper region, in performing image quality diagnosis on the acquired reading result of the in-paper region.

12. A program causing an information processing apparatus to realize:
a function of acquiring a reading result of an in-paper region that is a region in which an image of paper is read, and a reading result of an out-of-paper region that is a region outside the paper and in which an image used for diagnosing the image of the paper is provided; and
a function of performing image quality diagnosis using the acquired reading result of the out-of-paper region, in performing image quality diagnosis on the acquired reading result of the in-paper region.
